# EUROPÄISCHE PATENTSCHRIFT

(11) **EP 1 180 605 B1**
(45) Veröffentlichungstag und Bekanntmachung des Hinweises auf die Patenterteilung: **26.11.2003**
(21) Anmeldenummer: 01114295.7
(22) Anmeldetag: 13.06.2001
(51) Int. Cl.: F16B 5/02

(54) **Vorrichtung zum Verbinden von Bauteilen**
Device for connecting structural components
Dispositif pour assembler des elements constitutifs

(30) Priorität: 11.08.2000 DE 20013863 U; 20.01.2001 DE 20101088 U
(43) Veröffentlichungstag der Anmeldung: 20.02.2002
(73) Patentinhaber: Schwarzbich, Jörg, 33615 Bielefeld (DE)
(72) Erfinder: Schwarzbich, Jörg, 33615 Bielefeld (DE)
(74) Vertreter: TER MEER STEINMEISTER & PARTNER GbR

(56) Entgegenhaltungen:
- EP-A- 0 176 663
- EP-A- 0 955 479
- DE-A- 19 839 710
- US-A- 5 288 191

## Beschreibung

Die Erfindung betrifft eine Vorrichtung zum Verbinden von Bauteilen, mit einem an dem einen Bauteil angeordneten Basisteil, einem Abstandshalter, der mit dem Basisteil in Gewindeeingriff steht und sich mit einem Ende an dem anderen Bauteil abstützt, und einer reibschlüssig durch den Abstandshalter gesteckten Verbindungsschraube.

Eine bekannte Vorrichtung dieser Art wird in EP-B-0 176 663 beschrieben und dient dazu, zwei in einem bestimmten Abstand zueinander angeordnete Bauteile mit Hilfe der Verbindungsschraube zu verbinden, ohne daß die Bauteile beim Anziehen der Verbindungsschraube verformt werden. Die Verbindungsschraube wird beispielsweise durch das Bauteil gesteckt, das sich an dem Abstandshalter abstützen soll, und wird dann in ein Innengewinde des anderen, mit dem Basisteil verbundenen Bauteils eingeschraubt. Bei dieser Einschraubbewegung wird der Abstandshalter reibschlüssig mitgenommen. Das Gewinde zwischen Abstandshalter und Basisteil ist ein Linksgewinde, so daß der Abstandshalter weiter aus dem Basisteil herausgeschraubt wird und dem durch den Kopf der Verbindungsschraube gehaltenen Bauteil entgegen kommt, bis sich dieses Bauteil schließlich gegen die Stirnfläche des Abstandshalters legt.

Wenn jedoch der Abstand zwischen den zu verbindenden Bauteilen größer ist als der maximale Verstellweg des Abstandshalters, so kann es vorkommen, daß beim Einschrauben der Verbindungsschraube der Abstandshalter ganz aus dem Basisteil herausgeschraubt wird. Da der Abstandshalter in diesem Fall nicht oder nur schwer zugängig ist, bereitet es Schwierigkeiten, den Gewindeeingriff zwischen Abstandshalter und Basisteil wieder herzustellen.

Im Anlieferungszustand der Verbindungsvorrichtung ist der Abstandshalter normalerweise ganz in das Basisteil eingeschraubt. Aus der Praxis ist eine Verbindungsvorrichtung bekannt, bei der der Abstandshalter in dieser Stellung an einem Anschlag anliegt und außerdem durch eine federnde Zunge in seiner Position gehalten wird. Der Widerstand dieser Zunge muß sich jedoch überwinden lassen, wenn die Verbindungsschraube eingeschraubt wird. Somit ist nicht ausgeschlossen, daß sich der Abstandshalter vor dem Einsatz der Verbindungsvorrichtung aufgrund unsachgemäßer Behandlung oder aufgrund von Erschütterungen ganz vom Basisteil löst, so daß die Teile der Verbindungsvorrichtung auseinander fallen und verloren gehen.

Aus Stabilitätsgründen sollten das Basisteil und der Abstandshalter aus Metall bestehen. Dann besteht jedoch die Gefahr, daß die mit einander zu verbindenden Bauteile bei der Montage durch den vom Basisteil vorspringenden Abstansdshalter verkratzt werden. Dieses Problem tritt beispielsweise im Fahrzeugbau auf, wenn mit Hilfe zweier solcher Verbindungsvorrichtungen ein Querträger zwischen zwei bereits lackierten Karosserieteilen des Fahrzeugs befestigt werden soll.

Aufgabe der Erfindung ist es deshalb, eine Vorrichtung der eingangs genannten Art zu schaffen, bei der eine Beschädigung des einen der zu verbindenden Bauteile durch den Abstandshalter vermieden wird.

Diese Aufgabe wird erfindungsgemäß dadurch gelöst, daß der Abstandshalter von einer Hülse aus weicherem Material, vorzugsweise aus Kunststoff, umgeben ist, die zumindest in dem Zustand, in dem Abstandshalter und Basisteil zusammen das kleinste Axialmaß haben, mit der Stirnfläche des Abstandshalters oder des härteren Kerns desselben bündig ist oder gegenüber dieser Stirnfläche vorspringt.

Vorteilhafte Ausgestaltungen der Erfindung ergeben sich aus den Unteransprüchen.

Eine mögliche Ausführungsform ist dadurch gekennzeichent, daß der Abstandshalter eine das Basisteil übergreifende Hülse trägt und daß an dieser Hülse und an dem Basisteil Anschläge angeordnet sind, die die Ausschraubbewegung von Basisteil und Abstandshalter begrenzen. Die schützende Hülse ist dann Teil des Abstandshalters.

Bei einer anderen Ausführungsform sitzt die Hülse am Basisteil. Da die Vorrichtung im ursprünglichen Zustand, vor Beginn der Montagearbeiten, auf das kleinstmögliche Axialmaß eingestellt ist, liegt der Abstandshalter so lange geschützt in der Hülse, bis die zu verbindenden Bauteile in Position gebracht wurden und die Verbindungsschraube eingeschraubt wird.

Im folgenden wird ein Ausführungsbeispiel der Erfindung anhand der Zeichnungen näher erläutert.

Es zeigen:
- Fig. 1: einen axialen Schnitt durch eine Verbindungsvorrichtung und zwei zu verbindende Bauteile;
- Fig. 2: zwei zu der Verbindungsvorrichtung gehörende Hülsen in einem Schnitt in der Ebene II - II in Fig. 1;
- Fig. 3: eine Seitenansicht einer der Hülsen;
- Fig. 4: die Verbindungsvorrichtung nach Fig. 1 im Zustand während des Herstellens der Verbindung;
- Fig. 5: eine Seitenansicht der Verbindungsvorrichtung ohne die zu verbindenden Bauteile, im Zustand mit maximalem Axialmaß;
- Fig. 6: einen axialen Schnitt durch eine Verbindungsvorrichtung gemäß einer anderen Ausführungsform;
- Fig. 7: eine Verbindungsvorrichtung gemäß einer weiteren Ausführungsform; und
- Fig. 8: einen Teil der Verbindungsvorrichtung nach Fig. 7 in einer Stirnansicht.

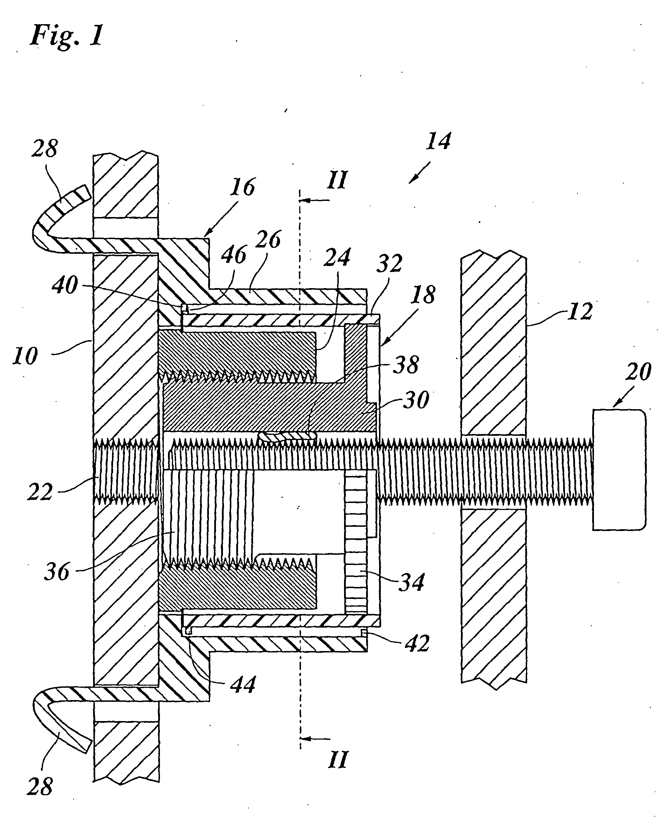

In Fig. 1 sind zwei plattenförmige Bauteile 10, 12 gezeigt, die durch eine Verbindungsvorrichtung 14 auf Abstand miteinander verbunden werden sollen. Die Verbindungsvorrichtung 14 wird gebildet durch ein an dem Bauteil 10 gehaltenes Basisteil 16, einen in das Basisteil 16 eingeschraubten Abstandshalter 18 und eine Verbindungsschraube 20, die durch das Bauteil 12 hindurch und in eine Mittelbohrung des Abstandshalters 18 eingesteckt ist und bei der Fertigstellung der Verbindung in eine Gewindebohrung 22 des Bauteils 10 eingeschraubt wird.

Das Basisteil 16 hat einen Kern 24 aus Metall, der sich an dem Bauteil 10 abstützt und dort am äußeren Umfang einen gerändelten Bund aufweist, auf den eine Hülse 26 aus Kunststoff aufgepreßt ist. Die Hülse 26 bildet zwei Klauen 28, mit denen das Basisteil 16 drehfest an das Bauteil 10 angeklipst ist.

Der Abstandshalter 18 hat ebenfalls einen Kern 30 aus Metall, der von einer Hülse 32 aus Kunststoff umgeben ist. Die Hülse 32 ist auf einen gerändelten Bund 34 des Kerns 30 aufgepreßt und greift in einen ringförmigen Zwischenraum zwischen dem Kern 24 und der Hülse 26 des Basisteils 16 ein.

Die Kerne 24, 30 des Basisteils und des Abstandshalters stehen durch ein Linksgewinde 36 miteinander in Eingriff. In die Mittelbohrung des Abstandshalters 18 ist ein Federring 38 eingepreßt, der eine kraftschlüssige Verbindung zum Außengewinde der Verbindungsschraube 20 herstellt.

Wenn die Verbindungsschraube 20 in die Gewindebohrung 22 des Bauteils 10 eingeschraubt wird, so wird der Abstandshalter 18 in Drehrichtung mitgenommen, während das Basisteil 16 durch die Klauen 28 drehfest gehalten wird. Aufgrund des Linksgewindes 36 wird daher der Abstandshalter 18 aus dem Basisteil 16 herausgeschraubt, so daß er sich axial auf das Bauteil 12 zu bewegt, das seinerseits durch den Kopf der Verbindungsschraube 20 gegen den Abstandshalter gedrückt wird.

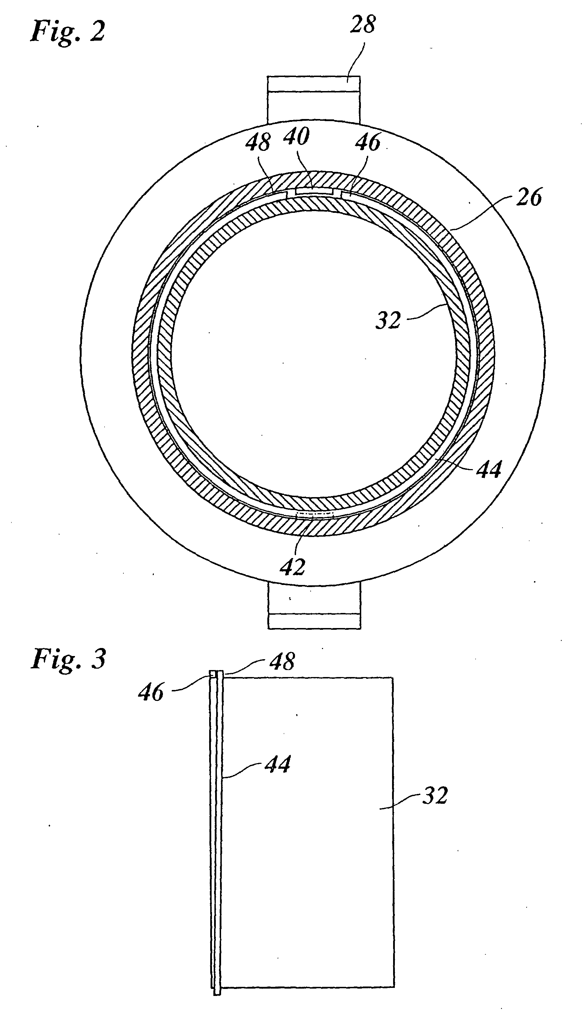

An den entgegengesetzten Enden der äußeren Hülse 26 des Basisteils 16 sind um 180° verdreht zwei nasenförmige Anschläge 40, 42 ausgebildet, die nach innen von der Hülse 26 vorspringen und zusammen mit einem weiteren Anschlag, der durch eine Rippe 44 auf dem äußeren Umfang der Hülse 32 des Abstandshalters 18 gebildet wird, den Verstellweg dieses Abstandshalters sowohl in Einschraubrichtung als auch in Ausschraubrichtung begrenzen. Wie deutlicher in Figuren 2 und 3 zu erkennen ist, hat die Rippe 44 die Form einer linksdrehenden Wendel, die am freien Ende der Hülse 32 nahezu vollständig um die Hülse umläuft. Die Steigung dieser Wendel stimmt mit der Steigung des Linksgewindes 36 überein. Die entgegengesetzten Enden 46, 48 der Rippe 44 liegen einander in einem Abstand gegenüber, der etwas größer ist als die Umfangslänge der Anschläge 40 und 42.

In dem in Figuren 1 und 2 gezeigten Zustand liegt das Ende 46 der Rippe 44 an dem Anschlag 40 an und verhindert so eine weitere Linksdrehung des Abstandshalters 18. Auf diese Weise wird die Einschraubbewegung des Abstandshalters begrenzt. Wenn jedoch der Abstandshalter 18 mit Hilfe der Verbindungsschraube 20 nach rechts gedreht wird, kann sich das gegenüberliegende Ende 48 der Rippe dem Anschlag 40 vorbeibewegen. Bei einer vollen Umdrehung tritt der Abstandshalter 18 um die Länge einer Gewindesteigung des Linksgewindes 36 aus dem Basisteil 16 aus, so daß sich die Rippe 44 dann auch mit ihrem Ende 46 an dem Anschlag 40 vorbei bewegen kann.

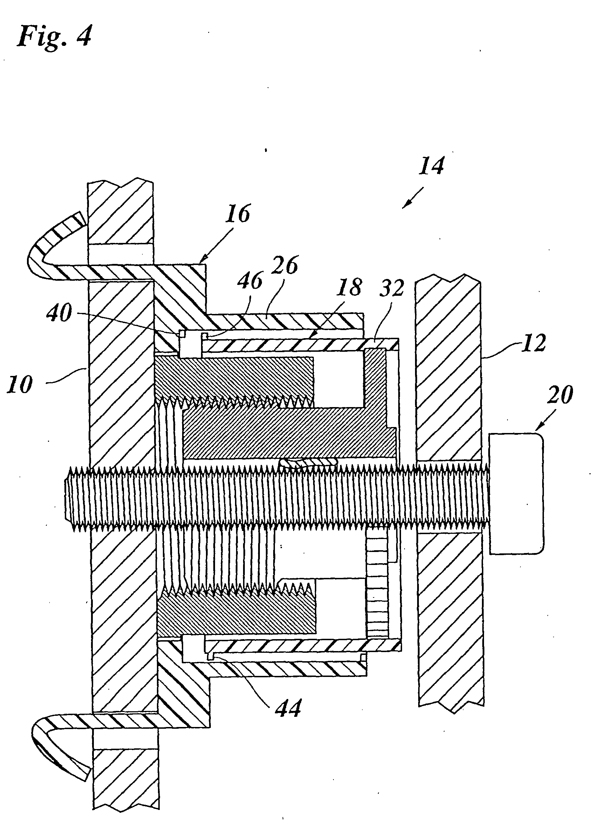

Beim weiteren Einschrauben der Verbindungsschraube 20 wird dann als Zwischenzustand der in Fig. 4 gezeigte Zustand erreicht. In diesem Zustand ist der Abstandshalter 18 bereits ein Stück aus dem Basisteil 16 herausgefahren. Wenn die Verbindungsschraube 20 weiter eingedreht wird, so wird das Bauteil 12 fest zwischen dem Kopf der Verbindungsschraube und dem Ende des Abstandshalters 18 eingespannt, und somit wird eine stabile Verbindung zwischen den Bauteilen 10 und 12 geschaffen.

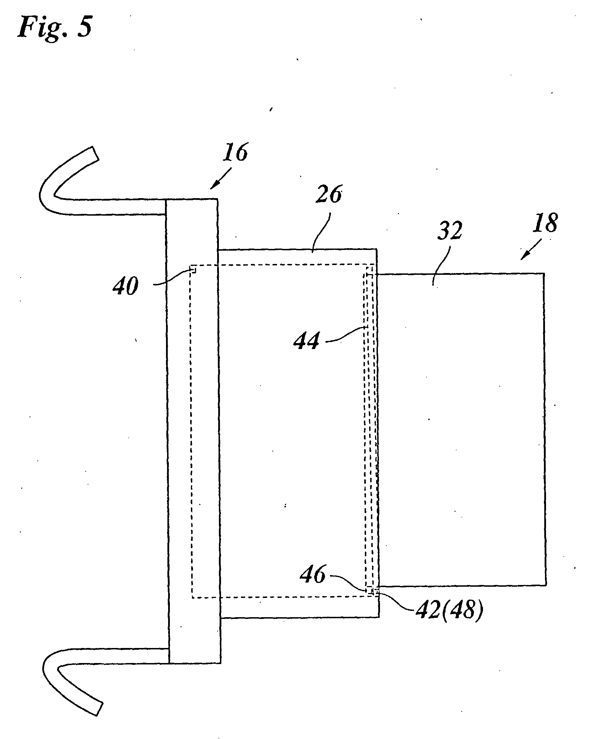

Wenn der Abstand zwischen diesen Bauteilen größer und die Verbindungsschraube 20 länger wäre, könnte der Abstandshalter 18 weiter ausgefahren werden. Die Ausschraubbewegung des Abstandshalters wird jedoch dadurch begrenzt. daß das Ende 48 der Rippe 44 an dem Anschlag 42 anstößt, wie in Fig. 5 gezeigt ist. Auf diese Weise wird ein vollständiges Herausdrehen des Abstandshalters 18 aus dem Basisteil 16 verhindert.

Wie in Figuren 1 und 4 zu erkennen ist, springt die Hülse 32 des Abstandshalters mit ihrem dem Bauteil 12 zugewandten Ende etwas über den Kern 30 hinaus vor. Wenn der Abstandshalter sich an das Bauteil 12 anlegt, kommt es daher zu einer Reibberührung zwischen der Hülse 32 und dem Bauteil 12. Da die Hülse 32 aus Kunststoff besteht wird eine Beschädigung der Oberfläche des Bauteils 12 vermieden. Falls eine stabilere Abstützung des Abstandshalters 18 am Bauteil 12 erwünscht ist, kann das Ende der Hülse 32 jedoch auch in eine bündige Lage zurückversetzt werden, so daß sich der Abstandshalter 18 auch mit seinem aus Metall bestehenden Kern 30 an dem Bauteil 12 abstützt.

Bei der Herstellung der oben beschriebenen Verbindungsvorrichtung kann man beispielsweise wie folgt vorgehen. Der Kern 30 des Abstandshalters wird in den Kern 24 des Basisteils 16 eingeschraubt, bevor diese Metallteile mit den zugehörigen Kunststoffhülsen verbunden sind. Das Einschrauben wird daher durch die Anschläge 40, 42 und die Rippe 44 nicht behindert. Die Einschraubtiefe kann dadurch auf ein bestimmtes Maß eingestellt werden, das in den Zwischenraum zwischen dem Bund 34 des Abstandshalters und der Stirnfläche des Kerns 24 des Basisteils eine geeignete Lehre eingefügt wird.

Die Hülse 32 wird dann von links in Fig. 1 über den Kern 24 des Basisteils geschoben und auf den Bund 34 des Abstandshalters aufgepreßt. Anschließend wird die Hülse 26 des Basisteils - wieder von links in Fig. 1 - über die Hülse 32 geschoben. Dabei wird die Hülse 26 in einer Winkelstellung gehalten, in der der Anschlag 40 in den Zwischenraum zwischen den Enden 46, 48 der Rippe 44 eintreten kann. In dieser Stellung wird die Hülse 26 dann auf den Kern 24 aufgepreßt, bis ihre Stirnfläche mit der Stirnfläche des Kerns 24 bündig ist.

Die Endlage des Abstandshalters 18 in der in Fig. 1 gezeigten Einschraubstellung läßt sich auf diese Weise präzise definieren. Der Verstellweg des Abstandshalters ist durch die Lage der Anschläge 40 und 42 definiert. Da sich diese Anschläge im gezeigten Beispiel diametral gegenüberliegen, entspricht der Verstellweg des Abstandshalters (n + 1/2) Umdrehungen, und er beträgt somit das (n + 1/2) - fache der Gewindesteigung des Linksgewindes 36 (n ist eine ganze Zahl). Durch Änderung des Winkelversatzes zwischen den Anschlägen 40 und 42 läßt sich dieser Verstellweg auch stufenlos variieren.

Die Endlage des Abstandshalters 18 in der Einschraubstellung wird vorzugsweise so gewählt, daß die dem Bauteil 10 zugewandte Stirnfläche des Abstandshalters 18 geringfügig gegenüber der Stirnfläche des Basisteils 16 zurückliegt. So wird verhindert, daß der Abstandshalter 18 klemmt, wenn das Basisteil 16 gegen das Bauteil 10 gedrückt wird.

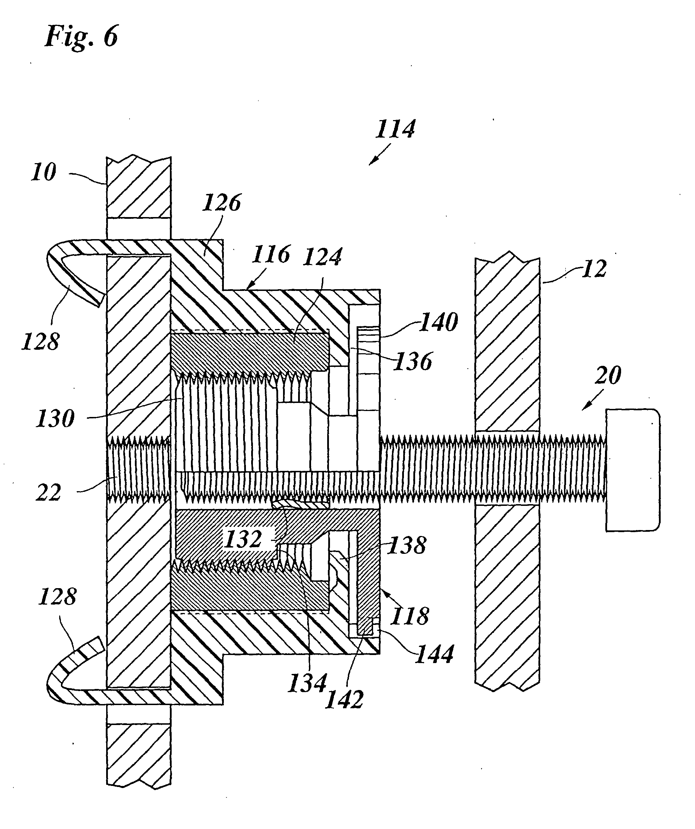

Fig. 6 zeigt eine Verbindungsvorrichtung 114 gemäß einer anderen Ausführungsform. Die Verbindungsvorrichtung 114 wird gebildet durch ein an dem Bauteil 10 gehaltenes Basisteil 116, einen in das Basisteil 116 eingeschraubten Abstandshalter 118 und die Verbindungsschraube 20, die durch das Bauteil 12 hindurch und in eine Mittelbohrung des Abstandshalters 118 eingesteckt ist und bei der Fertigstellung der Verbindung in die Gewindebohrung 22 des Bauteils 10 eingeschraubt wird.

Das Basisteil 116 hat eine Gewindebuchse 124 aus Metall, die sich an dem Bauteil 10 abstützt und am äußeren Umfang eine Rändelung aufweist, auf die eine Hülse 126 aus Kunststoff aufgepreßt ist. Die Hülse 126 bildet zwei Klauen 128, mit denen das Basisteil 116 drehfest an das Bauteil 10 angeklipst ist.

Der Abstandshalter 118 besteht ganz aus Metall. Die Gewindebuchse 124 des Basisteils und der Abstandshalter stehen durch ein Linksgewinde 130 miteinander in Eingriff. In die Mittelbohrung des Abstandshalters 118 ist ein Federring 132 eingepreßt, der eine kraftschlüssige Verbindung zum Außengewinde der Verbindungsschraube 20 herstellt.

Wenn die Verbindungsschraube 20 in die Gewindebohrung 22 des Bauteils 10 eingeschraubt wird, so wird der Abstandshalter 118 in Drehrichtung mitgenommen, während das Basisteil 116 durch die Klauen 128 drehfest gehalten wird. Aufgrund des Linksgewindes wird daher der Abstandshalter 118 aus dem Basisteil 116 herausgeschraubt, so daß er sich axial auf das Bauteil 12 zu bewegt, das seinerseits durch den Kopf der Verbindungsschraube 20 gegen den Abstandshalter gedrückt wird.

Das Linksgewinde 130 des Abstandshalters 118 wird an einem Ende, rechts in Figur 6, durch eine Schulter 134 begrenzt. Die Hülse 126 bildet am inneren Umfangsrand einen umlaufenden Bund 136, an dem sich ein Ende der Gewindebuchse 124 abstützt. Von diesem Bund 136 ragt an mindestens einer Umfangsstelle eine federnde Zunge 138 nach innen. Diese Zunge 138 bildet einen Anschlag, der mit Schulter 134 zusammenwirkt und so den maximalen Ausfahrweg des Abstandhalters 118 begrenzt.

An dem Ende, das dem Bauteil 12 zugewandt ist, weist der Abstandshalter 118 einen radial vorspringenden Flansch 140 auf, der eine Anlagefläche für das Bauteil 12 bildet, wenn die Bauteile 10 und 12 durch die Verbindungsschraube 20 miteinander verspannt sind. In dem in Figur 6 gezeigten Zustand, in dem der Abstandshalter 118 noch ganz in das Basisteil 116 zurückgezogen ist, schließt die Außenfläche des Flansches 140 bündig mit der Stirnfläche der Hülse 126 ab. Ein radial vom Rand des Flansches 140 ausgehender Vorsprung 142 liegt an einem nach innen ragenden Anschlag 144 des Basisteils 116 an. Der Anschlag 144 verhindert somit, daß der Abstandshalter 118 in Einschraubrichtung der Verbindungsschraube 20 gesehen links herum gedreht wird. Somit läßt sich der Abstandshalter 118 nicht über die in Figur 6 gezeigte Position hinaus in Richtung auf das Bauteil 10 verstellen. Wenn jedoch die Verbindungsschraube 20 rechts herum in die Gewindebuchse 124 eingeschraubt wird, kann sich der Abstandshalter 118 rechts herum mitdrehen, da dann der Vorsprung 142 vom Anschlag 144 freikommt. Nach einer vollständigen Umdrehung des Abstandshalters 118 ist der Vorsprung 142 bereits so weit aus dem Basisteil 116 herausgetreten, daß er sich außerhalb des Basisteils an dem Anschlag 144 vorbei bewegen kann.

Bei dem gezeigten Ausführungsbeispiel ist somit sichergestellt, daß sich der Abstandshalter 118 weder in der einen noch in der anderen Richtung aus dem Basisteil 116 herausschrauben läßt.

Beim Zusammenbau der Verbindungsvorrichtung kann der Abstandshalter 118 jedoch von der rechten Seite in Figur 6 aus in die Gewindebuchse 124 des Basisteils eingeschraubt werden. Dabei wird die elastische Zunge 138 zunächst nach innen gebogen, so daß sie dem Abstandshalter 118 ausweicht. Beim weiteren Einschrauben des Abstandshalters gleitet die Zunge 138 dann am Außengewinde des Abstandshalters entlang, und sie gleitet schließlich über die Schulter 134 hinweg, so daß sie wieder in ihre ursprüngliche Position zurückfedern kann, in der sie als Anschlag für die Schulter 134 wirksam ist.

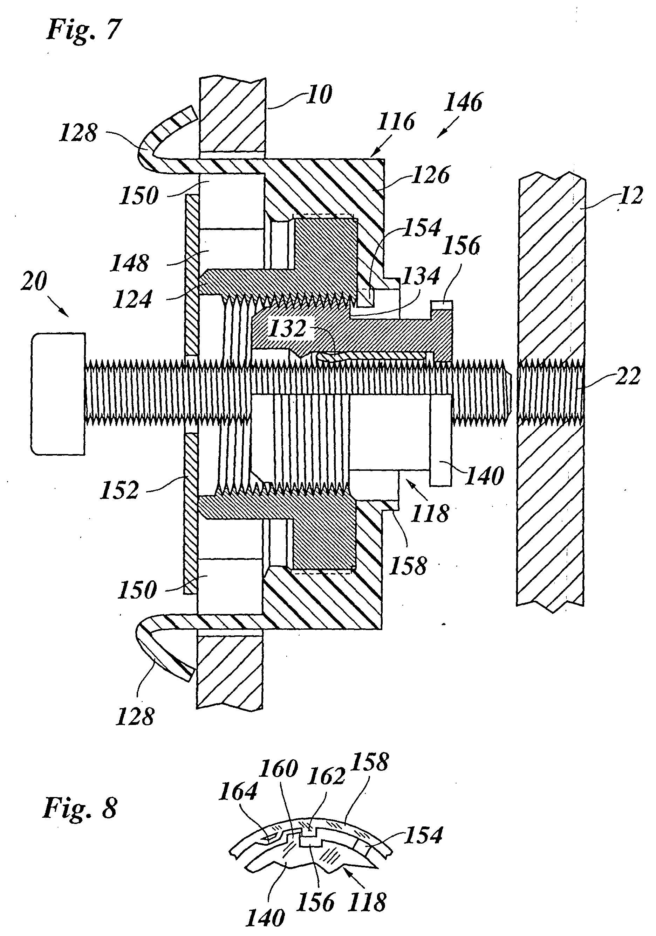

Figuren 7 und 8 zeigen als weiteres Beispiel eine Verbindungsvorrichtung 146, bei der die Verbindungsschraube 20 vom entgegengesetzten Ende her eingeschraubt wird. Das Bauteil 10 weist in diesem Fall eine schlüssellochförmige Öffnung 148 mit zwei einander diametral gegenüberliegenden Ausstülpungen 150 zur Aufnahme der Klauen 128 auf. Der kreisförmige innere Teil der Öffnung 148 ist durch eine Scheibe 152 abgedeckt, an der sich der Kopf der Verbindungsschraube 20 und die Gewindebuchse 124 des Basisteils 116 abstützen.

Die Gewindebuchse 124 und der Abstandshalter 118 haben in diesem Fall ein Rechtsgewinde, so daß der Abstandshalter 118 nach rechts in Figur 7, in Richtung auf das Bauteil 12 ausfährt, wenn die Verbindungsschraube 20 rechts herum gedreht wird.

Figur 7 zeigt den Abstandshalter 118 bereits im ausgefahrenen Zustand, in dem die Schulter 134 beinahe schon die Anschlagposition erreicht hat. Der Anschlag an der Hülse 126 wird in diesem Fall jedoch nicht durch eine federnde Zunge, sondern durch einen starren Vorsprung 154 gebildet. Der am Abstandshalter 118 ausgebildete Flansch 140, der in diesem Fall einen kleineren Durchmesser hat, weist an einer Stelle seines Umfangs eine Ausnehmung 156 auf, durch die der Vorsprung 154 axial hindurch treten kann.

Bei der Montage der Verbindungsvorrichtung 146 werden zunächst die Gewindebuchse 124 und der Abstandshalter mit einander verschraubt, bevor die Gewindebuchse 124 in die Hülse 126 eingepreßt wird. Der Abstandshalter 118 kann daher von rechts in Figur 7 in die Gewindebuchse 124 eingeschraubt werden, bis ungefähr die in Figur 7 gezeigte Einschraubstellung erreicht ist. Anschließend werden der Abstandshalter 118 und die Gewindebuchse 114 gemeinsam von der linken Seite in Figur 7 aus in die Hülse 126 eingesteckt. Dabei wird der Abstandshalter 118 in einer Winkelstellung gehalten, in der der Vorsprung 154 durch die Ausnehmung 156 hindurch treten kann. In der Endphase der Einsteckbewegung wird dann die Gewindebuchse 124 mit ihrem gerändelten äußeren Umfangsrand in die Hülse 126 eingepreßt. Schließlich wird der Abstandshalter 118 tiefer in die Gewindebuchse 124 eingeschraubt, bis seine entgegengesetzten Stirnflächen mit den entsprechenden Stirnflächen des Basisteils 116 bzw. der Hülse 126 bündig sind.

In diesem Zustand, in dem die Verbindungsvorrichtung das kleinstmögliche Axialmaß hat, wird das Basisteil 116 dann am Bauteil 10 eingeklipst, die Verbindungsschraube 20 wird eingesteckt und eingeschraubt, so daß der Abstandshalter 118 wieder ausgefahren wird.

Figur 8 zeigt einen Teil der Stirnfläche des Flansches 140 sowie eines Teil eines an der Hülse 126 ausgebildeten Kragens 158, der diesen Flansch 140 umgibt. In dem in Figur 8 gezeigten Zustand ist die am Rand des Flansches 140 gebildete Ausnehmung 156 gegenüber dem Vorsprung 154 des Basisteils verdreht. An der in der Ansicht gemäß Figur 8 linken Flanke der Ausnehmung 156 ist ein radial vom Rand des Flansches 140 nach außen ragender Vorsprung 160 ausgebildet. An die innere Umfangsfläche des Kragens 158 sind ein nach innen ragender Anschlag 162 und eine brückenartig ausgebildete Rastfeder 164 angeformt. Solange der Flansch 140 axial außerhalb des Basisteils liegt, wie in Figur 7, kann der Abstandshalter 118 rechts herum gedreht und somit tiefer in das Basisteil 116 eingeschraubt werden. Bei der letzten Umdrehung, unmittelbar bevor das minimale Axialmaß erreicht ist, tritt der Flansch 140 in den Kragen 158 ein. Der Vorsprung 160 gleitet zunächst unter Überwindung eines gewissen Rastwiderstands über die Rastfeder 164 hinweg und schlägt dann am Anschlag 162 an. Auf diese Weise wird die weitere Einschraubbewegung des Abstandhalters 118 begrenzt. Durch die Rastfeder 164 wird der Abstandshalter in der erreichten Position mit minimalem Axialmaß gehalten, und es wird verhindert, daß sich der Abstandshalter aufgrund von Erschütterungen von selbst verstellt. Die Kraft der Rastfeder 164 ist jedoch so dimenioniert, daß sie durch den Reibschluß zwischen der Verbindungsschraube 20 und dem Abstandshalter überwunden werden kann, wenn die Verbindungsschraube 20 eingeschraubt wird. Bei dieser Einschraubbewegung dreht sich der Abstandshalter 118 in der Ansicht gemäß Figur 8 links herum, so daß sich der Vorsprung 160 vom Anschlag 162 entfernt.

## Patentansprüche

1. Vorrichtung zum Verbinden von Bauteilen (10, 12), mit einem an dem einen Bauteil (10) angeordneten Basisteil (16; 116), einem Abstandshalter (18; 118), der mit dem Basisteil (16; 116) in Gewindeeingriff steht und sich mit einem Ende an dem anderen Bauteil (12) abstützt, und einer reibschlüssig durch den Abstandshalter (18; 118) gesteckten Verbindungsschraube (20), **dadurch gekennzeichnet, daß** der Abstandshalter (18; 118) von einer Hülse (32; 126) aus weicherem Material, vorzugsweise aus Kunststoff, umgeben ist, die zumindest in dem Zustand, in dem Abstandshalter und Basisteil zusammen das kleinste Axialmaß haben, mit der Stirnfläche des Abstandshalters (18, 118) oder des härteren Kerns (30) desselben bündig ist oder gegenüber dieser Stirnfläche vorspringt.

2. Vorrichtung nach Anspruch 1, **dadurch gekennzeichnet, daß** die Hülse (32) fest am Umfang des härteren Kerns (30) des Abstandahalters (18) sitzt und das Basisteil (16) übergreift und daß an dieser Hülse (32) und an dem Basisteil (16) Anschläge (42, 44) angeordnet sind, die die Ausschraubbewegung von Basisteil und Abstandshalter begrenzen.

3. Vorrichtung nach Anspruch 2, **dadurch gekennzeichnet, daß** die Hülse (32) und das Basisteil (16) ein weiteres Paar von Anschlägen (40, 44) aufweisen, die die Einschraubbewegung von Basisteil und Abstandshalter begrenzen.

4. Vorrichtung nach Anspruch 2 oder 3, **dadurch gekennzeichnet, daß** die Anschläge (40, 42, 44) so angeordnet sind, daß sie sich bei der Drehung des Abstandshalters (16) innerhalb des Verstellbereichs aneinander vorbei bewegen und erst bei Erreichen der Endlage in Drehrichtung des Abstandshalters in ihre , Anlageposition bewegt werden.

5. Vorrichtung nach Anspruch 4, **dadurch gekennzeichnet, daß** einer der Anschläge durch eine wendelförmige Rippe (44) gebildet wird, deren Steigung mit der Gewindesteigung des Gewindes (36) zwischen Basisteil (16) und Abstandshalter (18) übereinstimmt und deren entgegengesetzte Enden in Umfangsrichtung in einem solchen Abstand zueinander liegen, daß sie den anderen Anschlag (40, 42) zwischen sich aufnehmen können.

6. Vorrichtung nach Anspruch 5, **dadurch gekennzeichnet, daß** die Rippe (44) an der Hülse (32) ausgebildet ist.

7. Vorrichtung nach einem der vorstehenden Ansprüche, **dadurch gekennzeichnet, daß** die Hülse (32) durch Preßsitz oder Verrastung auf dem Kern (30) des Abstandshalters (18) gehalten ist.

8. Vorrichtung nach einem der vorstehenden Ansprüche, **dadurch gekennzeichnet, daß** das Basisteil (16) einen innerhalb der Hülse (32) des Abstandshalters liegenden Kern (24) und eine Hülse (26) aufweist, die die Hülse (32) des Abstandshälters umgibt.

9. Vorrichtung nach Anspruch 8, **dadurch gekennzeichnet, daß** die Anschläge (40, 42) des Basisteils am inneren Umfang der Hülse (26) angeordnet sind.

10. Vorrichtung nach Anspruch 8 oder 9, **dadurch gekennzeichnet, daß** die Hülse (26) des Basisteils durch Preßsitz oder Verrastung am Kern (24) des Basisteils (16) gehalten ist.

11. Vorrichtung nach Anspruch 1, **dadurch gekennzeichnet, daß** die Hülse (126) fest am Basisteil (116) sitzt.

12. Vorrichtung nach Anspruch 11, **dadurch gekennzeichnet, daß** die Bewegung des Abstandshalters (118) relativ zum Basisteil (116) in einer Richtung durch eine am Ende des Gewindeabschnitts des Abstandshalters gebildete Schulter (134) begrenzt wird, die axial an einem erst nach dem Zusammenbau von Abstandshalter (118) und Basisteil (116) wirksam werdenden Anschlag (138; 154) des Basisteils anstößt.

13. Vorrichtung nach Anspruch 12, **dadurch gekennzeichnet, daß** der Anschlag durch ein Federelement (138) gebildet wird, das beim Einschrauben des Abstandshalters (118) nachgibt und sich dann verriegelnd hinter die Schulter (134) legt.

14. Vorrichtung nach Anspruch 13, **dadurch gekennzeichnet, daß** das Basisteil (116) eine Gewindebuchse (124) aus Metall aufweist, die von der Hülse (126) aus Kunststoff umgeben ist, und daß die federnde Zunge (138) an der Hülse (126) ausgebildet ist.

15. Vorrichtung nach Anspruch 12, **dadurch gekennzeichnet, daß** das Basisteil (116) eine Gewindebuchse (124) aus Metall aufweist, die im Preßsitz in der Hülse (126) aus Kunststoff gehalten ist, und daß der Anschlag (154) starr an der Hülse (126) ausgebildet ist.

16. Vorrichtung nach einem der Ansprüche 12 bis 15, **dadurch gekennzeichnet, daß** der Abstandhalter (118) an dem Ende, dem die Schulter (134) zugewandt ist, einen radial überstehenden Flansch (140) aufweist und daß ein von dem Flansch (140) ausgehender Vorsprung (142; 160) zusammen mit einem am Basisteil (116) ausgebildeten Anschlag (144; 162) die Drehbewegung des Abstandshalters (118) in einer Endlage relativ zum Basisteil (116) begrenzt.

17. Vorrichtung nach den Ansprüchen 15 und 16, **dadurch gekennzeichnet, daß** der Flansch (140) am äußeren Umfangsrand eine Ausnehmung (156) aufweist, die zu dem mit der Schulter (134) zusammenwirkenden Anschlag (154) des Basisteils komplementär ist.

## Claims

1. Device for connecting structural components (10, 12), having a base component (16; 116) which is arranged on the first structural component (10), having a spacer (18; 118) which is in threaded engagement with the base component (16; 116) and which is supported at one end on the second structural component (12), and having a connecting screw (20) which is inserted in a frictionally engaging manner through the spacer (18; 118), **characterised in that** the spacer (18; 118) is surrounded by a sleeve (32; 126) of softer material, preferably of plastics material, which sleeve (32; 126), at least in the state in which the spacer and the base component together have the smallest axial dimension, is flush with the end face of the spacer (18; 118) or the harder core (30) thereof, or protrudes relative to this end face.

2. Device according to claim 1, **characterised in that** the sleeve (32) is securely seated on the periphery of the harder core (30) of the spacer (18) and engages over the base component (16), and **in that** stops (42, 44) are arranged on this sleeve (32) and on the base component (16) and limit the screwing-out movement of the base component and the spacer.

3. Device according to claim 2, **characterised in that** the sleeve (32) and the base component (16) have a further pair of stops (40, 44) which limit the screwing-in movement of the base component and the spacer.

4. Device according to claim 2 or claim 3, **characterised in that** the stops (40, 42, 44) are arranged in such a manner that they move past each other when the spacer (16) is rotated in the adjustment range and are moved into the contact position thereof only when the end position in the direction of rotation of the spacer is reached.

5. Device according to claim 4, **characterised in that** one of the stops is formed by a helical rib (44) whose pitch corresponds to the thread pitch of the thread (36) between the base component (16) and the spacer (18) and whose opposite ends are located with such spacing from each other in a peripheral direction that they can receive the other stop (40, 42) therebetween.

6. Device according to claim 5, **characterised in that** the rib (44) is formed on the sleeve (32).

7. Device according to any one of the preceding claims, **characterised in that** the sleeve (32) is held on the core (30) of the spacer (18) by means of a press-fit or locking action.

8. Device according to any one of the preceding claims, **characterised in that** the base component (16) has a core (24), which is located inside the sleeve (32) of the spacer, and a sleeve (26) which surrounds the sleeve (32) of the spacer.

9. Device according to claim 8, **characterised in that** the stops (40, 42) of the base component are arranged on the inner periphery of the sleeve (26).

10. Device according to claim 8 or claim 9, **characterised in that** the sleeve (26) of the base component is held on the core (24) of the base component (16) by means of a press-fit or locking action.

11. Device according to claim 1, **characterised in that** the sleeve (126) is securely seated on the base component (116).

12. Device according to claim 11, **characterised in that** the movement of the spacer (118) relative to the base component (116) is limited in one direction by a shoulder (134) which is formed at the end of the threaded portion of the spacer and which axially adjoins a stop (138; 154) of the base component, which stop (138; 154) becomes effective only after the spacer (118) and the base component (116) have been assembled.

13. Device according to claim 12, **characterised in that** the stop is formed by a resilient element (138) which gives way when the spacer (118) is screwed in and is then located in a locking manner behind the shoulder (134).

14. Device according to claim 13, **characterised in that** the base component (116) has a threaded metal bushing (124) which is surrounded by the sleeve (126) of plastics material, and **in that** the resilient tongue (138) is formed on the sleeve (126) .

15. Device according to claim 12, **characterised in that** the base component (116) has a threaded metal bushing (124) which is held in a press-fit manner in the sleeve (126) of plastics material, and **in that** the stop (154) is formed in a rigid manner on the sleeve (126).

16. Device according to any one of claims 12 to 15, **characterised in that** the spacer (118) has a radially protruding flange (140) at the end facing the shoulder (134), and **in that** a projection (142; 160) which extends from the flange (140), together with a stop (144; 162) which is formed on the base component (116), limits the rotational movement of the spacer (118) in an end position relative to the base component (116).

17. Device according to claims 15 and 16, **characterised in that** the flange (140) has, at the outer peripheral edge, a recess (156) which is complementary to the stop (154) of the base component, which stop (154) co-operates with the shoulder (134).

## Revendications

1. Dispositif pour assembler des éléments constitutifs (10, 12), avec une pièce de base (16 ; 116), disposée sur l'un des éléments constitutifs (10), un écarteur (18 ; 118), qui est en prise filetée avec la pièce de base (16 ; 116) et s'appuie avec une extrémité sur l'autre élément constitutif (12) et une vis d'assemblage (20), engagée par friction dans l'écarteur (18 ; 118), **caractérisé en ce que** l'écarteur (18 ; 118) est entouré par un manchon (32 ; 126) en matériau plus tendre, de préférence en matière plastique, manchon qui affleure avec la surface frontale de l'écarteur (18 ; 118) ou du noyau plus rigide (30) de celui-ci ou qui porte à faux en face de cette surface frontale, au moins dans l'état dans lequel l'écarteur et la pièce de base ont ensemble la plus petite dimension axiale.

2. Dispositif selon la revendication 1, **caractérisé en ce que** le manchon (32) est bloqué sur la périphérie du noyau plus rigide (30) de l'écarteur (18) et recouvre la pièce de base (16) et que des butées (42, 44) sont disposées sur ce manchon (32) et sur la pièce de base (16), butées qui limitent le mouvement de dévissage de la pièce de base et de l'écarteur.

3. Dispositif selon la revendication 2, **caractérisé en ce que** le manchon (32) et la pièce de base (16) présentent une autre paire de butées (40, 44) qui limitent le mouvement de vissage de la pièce de base et de l'écarteur.

4. Dispositif selon la revendication 2 ou 3, **caractérisé en ce que** les butées (40, 42, 44) sont disposées de sorte qu'elles passent l'une devant l'autre à l'intérieur de la zone de réglage lors de la rotation de l'écarteur (16) et ne sont déplacées dans leur position de départ qu'en atteignant la position extrême dans le sens de rotation de l'écarteur.

5. Dispositif selon la revendication 4, **caractérisé en ce que** l'une des butées est formée par une nervure hélicoïdale (44), dont le pas s'adapte au pas de filetage du filetage (36) entre la pièce de base (16) et l'écarteur (18) et dont les extrémités opposées dans le sens périphérique sont situées à une distance telle l'une par rapport à l'autre, qu'elles peuvent loger l'autre butée (40, 42) entre elles.

6. Dispositif selon la revendication 5, **caractérisé en ce que** la nervure (44) est constituée sur le manchon (32).

7. Dispositif selon l'une des revendications précédentes, **caractérisé en ce que** le manchon (32) est maintenu sur le noyau (30) de l'écarteur (18) par ajustement forcé ou enclenchement.

8. Dispositif selon l'une des revendications précédentes, **caractérisé en ce que** la pièce de base (16) présente un noyau (24) situé à l'intérieur du manchon (32) de l'écarteur et un manchon (26) qui entoure le manchon (32) de l'écarteur.

9. Dispositif selon la revendication 8, **caractérisé en ce que** les butées (40, 42) de la pièce de base sont disposées sur la périphérie intérieure du manchon (26).

10. Dispositif selon la revendication 8 ou 9, **caractérisé en ce que** le manchon (26) de la pièce de base est maintenu sur le noyau (24) de la pièce de base (16) par ajustement forcé ou enclenchement.

11. Dispositif selon la revendication 1, **caractérisé en ce que** le manchon (126) est bloqué sur la pièce de base (116).

12. Dispositif selon la revendication 11, **caractérisé en ce que** le mouvement de l'écarteur (118) par rapport à la pièce de base (116) est limité dans une direction par un épaulement (134) formé à l'extrémité de la section de filetage de l'écarteur, épaulement qui s'appuie axialement sur une butée (138 ; 154) de la pièce de base qui ne devient active qu'après l'assemblage de l'écarteur (118) et de la pièce de base (116).

13. Dispositif selon la revendication 12, **caractérisé en ce que** la butée est formée par un élément élastique (138), qui se relâche lors du vissage de l'écarteur (118) et se place ensuite en position de verrouillage derrière l'épaulement (134).

14. Dispositif selon la revendication 13, **caractérisé en ce que** la pièce de base (116) présente une douille taraudée (124) en métal, qui est entourée par le manchon (126) en matière plastique et que la languette élastique (138) est constituée sur le manchon (126).

15. Dispositif selon la revendication 12, **caractérisé en ce que** la pièce de base (116) présente une douille taraudée (124) en métal, qui est maintenue dans le manchon (126) en matière plastique par ajustement forcé et que la butée (154) est constituée de manière rigide sur le manchon (126).

16. Dispositif selon l'une des revendications 12 à 15, **caractérisé en ce que** l'écarteur (118) présente une bride (140) faisant saillie radialement à l'extrémité vers laquelle l'épaulement (134) est toumé et qu'un porte-à-faux (142 ; 160), qui part de la bride (140), limite le mouvement de rotation de l'écarteur (118) dans une position extrême, par rapport à la pièce de base, conjointement avec une butée (144 ; 162) constituée sur la pièce de base (116).

17. Dispositif selon les revendications 15 et 16, **caractérisé en ce que** la bride (140) présente un creux (156) sur le bord périphérique extérieur, creux qui est complémentaire par rapport à la butée (154) de la pièce de base qui agit conjointement avec l'épaulement (134).
